# FASCICULE DE BREVET EUROPEEN

(11) **EP 2 173 150 B1**
(45) Date de publication et mention de la délivrance du brevet: **05.08.2015**
(21) Numéro de dépôt: 08806070.2
(22) Date de dépôt: 24.06.2008
(51) Int. Cl.: A01D 45/10

(54) **DISPOSITIF DE COUPE ET D'ETETAGE DE CANNES A SUCRE**
VORRICHTUNG ZUM SCHNEIDEN VON ZUCKERROHR
SUGARCANE CUTTING AND TOPPING DEVICE

(30) Priorité: 02.07.2007 FR 0756209
(43) Date de publication de la demande: 14.04.2010
(73) Titulaire: Adam de Villiers, Jacques, 97439 Sainte Rose (RE)
(72) Inventeur: ADAM DE VILLIERS, Jacques, 97439 Sainte Rose (RE); ADAM DE VILLIERS, Clovis, 97439 Sainte Rose (RE)
(74) Mandataire: Rhein, Alain
(86) Numéro de dépôt international: PCT/FR2008/051138
(87) Numéro de publication internationale: WO 2009/007589

(56) Documents cités:
- WO-A-85/00268
- FR-A- 1 482 753
- US-A- 4 783 952
- US-A- 4 878 341
- US-A- 5 441 090

## Description

La présente invention entre dans le domaine de l'agriculture, en particulier dans la culture de canne à sucre.

L'invention concerne plus particulièrement la coupe et l'étêtage de canne à sucre au travers d'un dispositif et d'un procédé de coupe particuliers.

De manière connue, les cannes sont coupées au ras du sol avant floraison, la concentration en sucre étant maximale dans la partie basse de la tige. La partie supérieure ainsi que les feuilles sont éliminées immédiatement par une opération d'étêtage.

Les dispositifs existants destinés à la coupe et l'étêtage de cannes à sucre se présentent sous la forme de machines agricoles complexes, lourdes et offrant peu de maniabilité. Si de tels engins sont adaptés pour la récolte sur des exploitations pourvues de parcelles de grande taille et nivelées uniformément, elles ne peuvent pas être utilisées au sein d'exploitation de moindre importance, dont les parcelles sont pentues, offrent un dénivelé important ou irrégulier. En effet, ces machines n'acceptent généralement pas une pente de plus de 15%.

De plus, le poids important des engins agricoles requiert un sol stable, peu humide et empierré afin d'éviter tout enfoncement ou tassement de sol.

Un tel dispositif est notamment décrit dans les documents FR 2 717 345 et US 2005/0028503. Le document US 4783952 A décrit un dispositif qui comprend toutes les caractéristiques du préambule de la revendication 1.

Les dispositifs de l'état de la technique ne sont donc pas adaptés à la récolte de la canne à sucre au sein d'exploitations traditionnelles dont les parcelles restent difficilement aménageables en raison de la configuration topographique du terrain et de la forte pluviométrie qui y règne.

Ce type de parcelle requiert donc une récolte manuelle, longue, coûteuse et fastidieuse, pour un rendement moins profitable.

Un autre type de dispositif connu est décrit dans le document US 5 441 090, dans le domaine de la sylviculture. Il s'agit d'une grue de levage de troncs déjà coupés, ladite grue se présentant sous la forme d'une mâchoire positionnée en balancement à l'extrémité d'un bras, dans l'extrémité opposée est articulée sur un véhicule équipé d'un attelage. De plus, ladite mâchoire présentent deux paries de griffes montrées en rotation selon un axe horizontal et dont la fermeture ménage un espace pour la préhension d'un tronc reposant au sol et son levage jusqu'à la dépose sur ledit attelage. Par ailleurs, un tel dispositif est aussi équipé d'une tronçonneuse orientée verticalement et permettant de débiter le tronc.

La présente invention a pour but de pallier les inconvénients de l'état de la technique en proposant un dispositif de coupe et d'étêtage de cannes à sucre destiné à être fixé sur un véhicule agricole ou de travaux public, plus particulièrement un véhicule équipé d'un bras articulé et actionné au travers d'un circuit hydraulique.

Le dispositif selon l'invention est donc amovible et présente un encombrement moindre afin de l'assujettir sur des véhicules de petite taille, adaptés pour évoluer au sein des parcelles traditionnelles susmentionnées.

Pour ce faire, un tel dispositif comprend des moyens de fixation amovible avec la tête d'un bras articulé sous forme d'un châssis monobloc comprenant des moyens de réception de forme complémentaire à des moyens présents sur ledit bras, notamment des plots, ledit châssis étant solidaire de moyens de coup desdites cannes.

Avantageusement, il se caractérise par le fait que lesdits moyens de coupe comprennent, d'une part, des moyens d'enserrement des cannes se présentant sous la forme d'au moins deux griffes articulées selon un axe vertical par rapport audit châssis de manière à passer d'une position d'ouverture à une position de fermeture et conformées de manière à venir en recouvrement au moins partiel l'une par rapport à l'autre formant un espace d'enserrement desdites cannes et, d'autre part, au moins une lame de coupe sous forme de disque sur pied desdites cannes à sucres maintenues dans l'espace d'enserrement, ladite lame étant située sous ledit châssis.

Les moyens de coupes selon l'invention sont spécialement configurés pour intervenir au sein de l'environnement évoqué précédemment, offrant une maniabilité plus importante.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue de dessus du dispositif selon l'invention ;
- la figure 2 est une représentation d'une vue de côté dudit dispositif ;
- la figure 3 est une représentation d'une vue frontale ;
- la figure 4 est une représentation latérale d'un autre mode de réalisation ; et
- les figures 5 et 6 sont des vues de face du mode de réalisation de la figure 4 selon deux positions différentes de débattement.

La présente invention concerne un dispositif 1 de coupe et d'étêtage de cannes à sucre.

Un premier avantage d'un tel dispositif 1 est qu'il est prévu amovible. Pour ce faire, il comprend des moyens 2 de fixation amovible avec la tête d'un bras articulé 3.

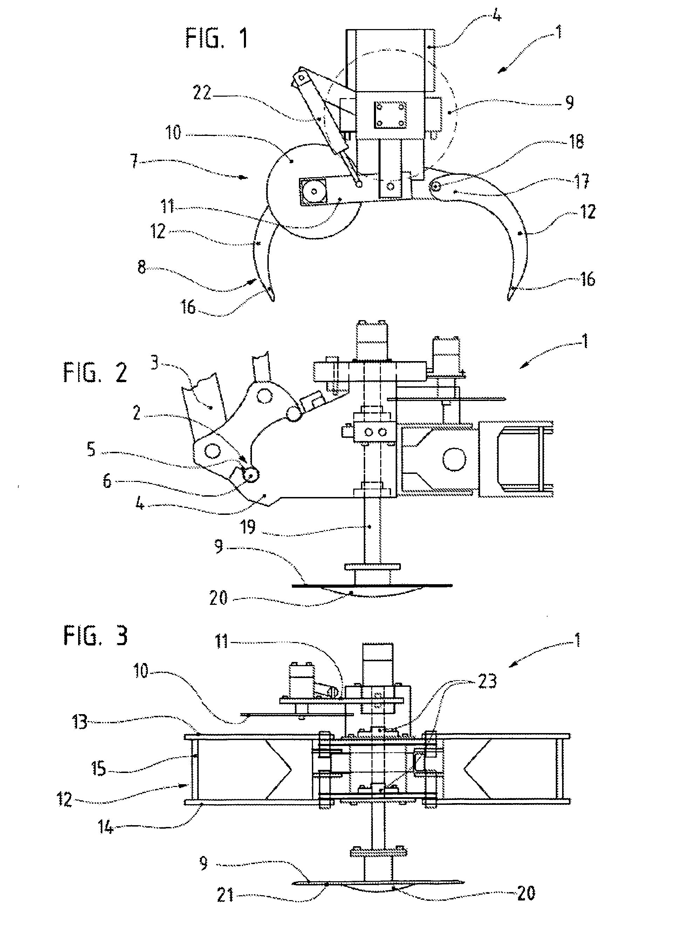

Comme visible sur la figure 3, ledit bras articulé 3 est monté sur un véhicule adapté, tel un véhicule agricole, de chantier ou analogue. Un tel bras 3 est contrôlé depuis le poste de commande dudit véhicule, notamment au travers d'au moins un circuit hydraulique.

Assujetti à la tête dudit bras 3, le faible encombrement du dispositif ainsi que son faible poids, de l'ordre de quelques centaines de kilogrammes, lui confère une maniabilité sans précédent. Combiné à un véhicule léger ou de petite taille, il permet une récolte au sein de parcelles à fort dénivelé, au sol peu régulier ou meuble.

De plus, le mouvement du bras articulé 3 permet de travailler en arc de cercle autour du véhicule porteur, ce dernier restant immobile, limitant le tassement dès lors du sol. L'amplitude dudit bras 3 offre une envergure de travail élevée, allant jusqu'à sept rangées de cannes, soit une largeur de travail d'environ neuf mètres sur lesquels le véhicule ne vient que tasser une unique rangée.

L'articulation du bras permet aussi au manipulateur d'adapter le mouvement de la machine en hauteur, inclinaison en fonction de son environnement direct, à savoir les différents obstacles, galets, mouvements de terrain, position des tiges de canne, densité, etc. Le déport du dispositif 1 au bout d'un bras articulé offre enfin une grande visibilité depuis le poste de pilotage.

La fixation du dispositif 1 s'effectue de manière connue : un support sous forme d'un châssis monobloc 4 comprend des moyens de réception 5 de moyens de fixation présents sur ledit bras 3. Ces moyens de réception 5 sont prévus de forme complémentaire à la forme de plots 6, en un ou plusieurs endroits du châssis 4.

Selon une caractéristique essentielle, ledit châssis 4 est solidaire de moyens de coupe 7 desdites cannes.

De plus, ces moyens de coupe 7 sont actionnés hydrauliquement et prévus multiples afin, d'une part, de saisir une touffe de cannes, d'autre part, de couper lesdites cannes à leur base puis, éventuellement, d'autre part encore, d'étêter la partie haute des cannes.

Tout particulièrement, le dispositif 1 de coupe et d'étêtage permet d'effectuer ces opérations indépendamment les unes des autres.

Pour ce faire, lesdits moyens de coupe 7 comprennent des moyens d'enserrement 8 de cannes, au moins une lame 9 de coupe. De plus, lesdits moyens de coupe 7 peuvent comprendre au moins une lame 10 d'étêtage articulée au travers d'un bras 11 de déport. Avantageusement, chacun des éléments précédents est indépendamment actionné les uns des autres au travers d'au moins quatre circuits hydrauliques.

Cette indépendance de mouvement de ces éléments permet d'alterner leur action respective. Ainsi, les moyens d'enserrement 8 saisissent plusieurs tiges de cannes puis la lame 9 les coupe à leur base. Le fagot de cannes ainsi tranché est posé au sol par rotation des moyens d'enserrement 8 grâce au pivotement du bras 3. L'opération peut être répétée plusieurs fois de manière à constituer un tas de cannes plus conséquent où ces dernières peuvent être directement étêtées.

Ainsi, les moyens d'enserrement 8 saisissent le tas préalablement constitué puis la lame 10, par déplacement du bras de déport 11, étête l'extrémité haute des tiges de cannes, en particulier la tête et les feuillages. Le bras de déport 11 monté en rotation conférant un mouvement circulaire à ladite lame d'étêtage 10 selon un arc de cercle recouvrant ledit espace d'enserrement. Les moyens d'enserrement 8 maintiennent leur prise pour charger le tas de tiges coupées et étêtées sur un moyen de transport adapté.

Dans le cas de moyens de coupe 7 dépourvus d'une lame d'étêtage 10, une fois les cannes coupées disposées en fagot, la lame 9 peut faire office de lame d'étêtage.

On notera que, selon un mode de réalisation particulier, non représenté, lesdits moyens de coupe 7 comprennent des moyens d'enserrement supplémentaires. Sous forme adaptés, ils sont articulés de manière à passer d'une position d'ouverture à une position de maintien de cannes coupées au sein dudit espace d'enserrement, et inversement. En d'autres termes, ils forment une pince supplémentaire maintenant les cannes coupées au sein de l'espace d'enserrement. Ainsi maintenues, les moyens d'enserrement peuvent s'ouvrir à nouveau afin d'attraper une nouvelle touffe de cannes pour les couper.

Plus particulièrement, cette pince supplémentaire peut être prévue de plus petite taille que les moyens d'enserrement, de manière à attraper et maintenir six à douze tiges, soit une touffe de cannes. Après la coupe, l'ouverture de cette pince supplémentaire permet de libérer les cannes qui sont alors déposée en fagot ou toujours enserrées au sein des moyens 8.

Plus spécifiquement, lesdits moyens d'enserrement 8 se présentent sous la forme d'au moins deux griffes 12 articulées de manière à passer d'une position d'ouverture à une position de fermeture, et inversement. Ces griffes 12 sont conformées de manière à venir en recouvrement au moins partiel l'une par rapport à l'autre, telle une mâchoire.

Selon le mode de réalisation visible sur les figures, ces griffes 12 comprennent chacune des plaques supérieure 13 et inférieure 14 rendues solidaires transversalement au travers d'au moins une tige de maintien 15 au niveau de leur extrémité libre 16. L'extrémité opposée 17 d'une plaque 13 (ou 14) est solidaire du châssis 4 et reliée à l'extrémité 17 correspondante de l'autre plaque 14 (ou respectivement 13).

Chaque griffe 12 est montée en rotation selon un axe 18 vertical par rapport audit châssis 4, en particulier au niveau de leur extrémité 17.

De plus, chaque plaque 13 et 14, et par conséquent chaque griffe 12, présente une forme en arc de cercle pour qu'en position de fermeture, les griffes 12 ménagent un espace d'enserrement desdites cannes.

En position de fermeture et de saisie des cannes encore sur pied, opère la lame de coupe 9 afin de sectionner lesdites cannes en partie basse de leur tige. Pour ce faire, la lame de coupe 9 est située sous le châssis 4.

Plus particulièrement, la saisie des tiges par les griffes 12 contraint les cannes contre la lame de coupe 9 qui les tranche en partie basse.

Selon un autre mode de réalisation préférentiel, ladite lame de coupe 9 est montée articulée de manière à venir en position de recouvrement dudit espace d'enserrement. Plus spécifiquement, ladite lame de coupe 9 est montée en coulissement de manière à passer d'une position effacée à ladite position de recouvrement, et inversement.

De plus, selon un mode particulier de réalisation, lesdits moyens de coupe 7comprennent en partie inférieure des moyens de protection sous forme d'un bouclier 20. En position rentrée, ce dernier recouvre au moins partiellement la lame 9, à l'exception de son tranchant, afin d'éviter son contact direct avec le sol, de la protéger des chocs ou qu'elle pénètre dans la terre. Ce bouclier 20 permet aussi d'éviter à la lame de coupe 9 d'entamer la souche ou les racines des cannes, par exemple lors d'une manoeuvre mal contrôlée ou intempestive.

Comme visible sur les figures 2 et 3, le bouclier 20 peut être de différente taille adapté à la largeur de la lame 9. Il peut être solidaire de la surface inférieure 21 et bombé par rapport à cette dernière. Par exemple, il peut être constitué d'une plaque métallique de plusieurs centimètres d'épaisseur pour un diamètre d'environ une trentaine de centimètres.

Ce bouclier 20 peut à la fois servir de protection et de renfort, mais aussi de fixation, être constituée en partie dudit châssis 4 ou ajouté sur ce dernier.

Ledit bouclier 20 peut être prévu mobile, en translation par rapport audit châssis 4 selon un axe 19. Ce dernier peut être un arbre en acier plein tandis que ledit support 4 comprend des paliers 23 qui ajustent automatiquement l'alignement de l'axe 19. Plus particulièrement, le châssis dudit support 4 comprend deux palliers 23 supérieur et un inférieur.

En résumé, la saisie par les moyens d'enserrement 8 et la coupe simultanée par la lame de coupe 9, combinées avec les mouvements du bras articulé 3, permet de récolter une touffe de canne à sa base, quelle que soit sa taille, son couchage sur le sol, sa densité, la pente du sol et ses obstacles.

D'autre part, la lame d'étêtage 10 peut se situer au dessus des moyens d'enserrement 8. Actionnées librement elle aussi, elle est montée en déplacement sur un bras de déport 11, lui-même indépendamment mobile par rapport au châssis 4. Plus particulièrement, ce bras de déport 11 est monté en rotation conférant un mouvement circulaire à la lame d'étêtage 10. De manière avantageuse, cette dernière parcourt un arc de cercle recouvrant l'espace ménagé entre les griffes 12 en position de fermeture. Ce déplacement sectionne la partie haute des tiges.

On notera à ce propos, comme indiqué précédemment, qu'entre l'opération de coupe et l'étêtage, les cannes sont positionnées en un tas au sol. L'étape d'étêtage s'effectue par une nouvelle saisie dudit tas, généralement en partie haute des tiges de cannes, afin d'en couper les feuilles.

On notera que le bras de déport 11 peut être actionné au travers d'un vérin hydraulique 22.

Le contrôle des moyens de coupe 7 s'effectue à partir du poste de pilotage du véhicule sur lequel est monté le dispositif 1 selon l'invention. Plus particulièrement, des moyens permettent de sélectionner, notamment au travers d'interrupteur à impulsion électrique, l'utilisation simultanée d'un ou plusieurs circuits hydrauliques. Ces moyens, permettent notamment d'inverser les circuits hydrauliques de la lame de coupe 9 vers la lame d'étêtage et, simultanément, d'inverser ceux des moyens d'enserrement 8 et du bras à déport 11.

On notera qu'un mode de réalisation particulier offre la possibilité d'un déplacement automatisé de la lame de coupe 9 indépendamment du mouvement des moyens d'enserrement 8, par exemple en adaptant un mécanisme coulissant ou à balayage.

Un autre mode de réalisation prévoit une rotation des moyens d'enserrement 8. Cette rotation peut avantageusement s'effectuer afin d'orienter en biais les griffes 12, les lames 9 et 10 restant verticales. Cette caractéristique peut être fort utile dans le cas d'une densité importante de canne ou une disposition de guingois de leurs tiges.

En combinaison des mouvements du bras 3 articulé sur le véhicule avec l'action des moyens d'enserrement 8 et de la lame de coupe 9 confère une coupe des cannes le plus bas possible, indépendamment de l'inclinaison ou l'état du terrain de culture.

Les moyens d'enserrement 8 peuvent être amenés par le bras articulé 3 au niveau d'une touffe de cannes jusqu'à un angle de 45 degrés. L'enserrement s'effectue sans bloquer les cannes au sein des griffes 12. Ces dernières sont relevées dans une position parallèle au sol, amenant l'axe 19 de la lame de coupe 9 en position verticale. Les tiges des cannes glissent lors de ce mouvement à l'intérieur de l'espace ménagé entre les griffes 12. La touffe resserrée est ensuite sectionnée par la lame de coupe 9 pour maintenir un tas déposé au sol par pivotement. Cette opération est répétée pour former un tas plus important, tout en disposant les cannes dans le même sens, la base des tiges d'un côté et la tête et les feuilles à l'autre extrémité.

Le tas ainsi formé est repris au niveau des têtes par les moyens d'enserrement 8 en vue de l'étêtage. Le tas fermement maintenu à l'horizontal par les griffes 12 est soulevé au dessus du sol, afin d'éviter que la lame d'étêtage 10 pénètre dans le sol. Les circuits hydrauliques des moyens d'enserrement 8 et de la lame de coupe 9 sont alors déconnectés tandis que ceux du bras de déport 11 et de la lame d'étêtage 10 sont activés. La coupe des feuilles est réalisée en un seul passage par la rotation de la lame 10 au travers du mouvement circulaire du bras de déport 11.

Après étêtage, les circuits sont inversés pour relâcher le tas de tiges. Il est repris par le milieu pour le déposer sur des moyens de transport ou dans une zone en vue de son chargement.

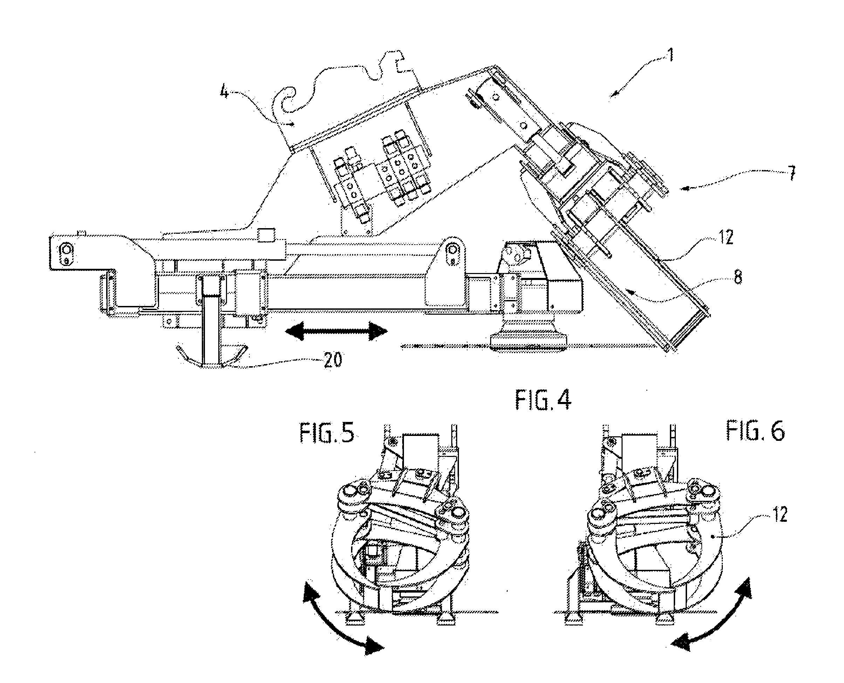

Selon un mode particulier de réalisation, visible sur les figures 4, 5 et 6, lesdits moyens d'enserrement peuvent être inclinés par rapport à ladite lame de coupe 9, notamment selon un angle de 45°. De plus, lesdits moyens d'enserrement peuvent être articulés par rapport audit châssis 4 selon un débattement latéral, comme visible sur les figures 5 et 6.

Le dispositif 1 de coupe de d'étêtage selon l'invention permet la récolte de parcelles traditionnelles au travers d'un encombrement moindre et de sa compatibilité avec un véhicule pourvu d'un bras articulé 3. Le mouvement des outils de coupe selon plusieurs degrés de liberté offre une manipulation aisée des tiges de cannes avant et après leurs coupe et étêtage.

Bien entendu, l'invention n'est pas limitée aux exemples illustrés et décrits précédemment qui peuvent présenter des variantes et modifications sans pour autant sortir du cadre de l'invention telle que revendiquée dans les revendications annexes.

## Revendications

1. Dispositif (1) amovible de coupe et d'étêtage de cannes à sucre, comprenant des moyens (2) de fixation amovible avec la tête d'un bras articulé (3) sous forme d'un châssis monobloc (4) comprenant des moyens de réception (5) de forme complémentaire à des moyens présents sur ledit bras (3), notamment des plots (6), ledit châssis (4) étant solidaire de moyens de coupe (7) desdites cannes, **caractérisé par le fait que** lesdits moyens de coupe (7) comprennent, d'une part, des moyens d'enserrement (8) des cannes se présentant sous la forme d'au moins deux griffes (12) articulées selon un axe vertical (18) par rapport audit châssis (4) de manière à passer d'une position d'ouverture à une position de fermeture et conformées de manière à venir en recouvrement au moins partiel l'une par rapport à l'autre formant un espace d'enserrement desdites cannes et, d'autre part, au moins une lame (9) de coupe sous forme de disque sur pied desdites cannes à sucres maintenues dans l'espace d'enserrement, ladite lame étant située sous ledit châssis (4).

2. Dispositif selon la revendication 1, **caractérisé par le fait que** ladite lame de coupe (9) est montée articulée de manière à venir en position de recouvrement dudit espace d'enserrement.

3. Dispositif selon la revendication 2, **caractérisé par le fait que** ladite lame de coupe (9) est montée en coulissement de manière à passer d'une position effacée à ladite position de recouvrement, et inversement.

4. Dispositif selon l'une quelconque des revendications précédentes, **caractérisé par le fait que** lesdits moyens de coupe comprennent au moins une lame (10) d'étêtage articulée au travers d'un bras de déport (11) monté en rotation conférant un mouvement circulaire à ladite lame d'étêtage selon un arc de cercle recouvrant ledit espace d'enserrement.

5. Dispositif selon la revendication 4, **caractérisé par le fait que** lesdits moyens d'enserrement (8), ladite lame de coupe (9), ledit bras de déport (11) et ladite lame d'étêtage (10) sont indépendamment actionnés au travers d'au moins quatre circuits hydrauliques.

6. Dispositif (1) selon l'une des revendications précédentes, **caractérisé par le fait que** lesdits moyens de coupe comprennent en partie inférieure des moyens de protection sous forme d'un bouclier (20).

7. Dispositif selon l'une quelconque des revendications précédentes, **caractérisé par le fait que** lesdits moyens d'enserrement sont inclinés par rapport à ladite lame de coupe (9), notamment selon un angle de 45°.

8. Dispositif selon l'une quelconque des revendications précédentes, **caractérisé par le fait que** lesdits moyens d'enserrement sont articulés par rapport audit châssis (4) selon un débattement latéral.

9. Dispositif selon l'une quelconque des revendications précédentes, **caractérisé par le fait que** lesdits moyens de coupe comprennent des moyens d'enserrement supplémentaires articulés de manière à passer d'une position d'ouverture à une position de maintien de cannes coupées au sein dudit espace d'enserrement, et inversement.

## Patentansprüche

1. Abnehmbare Vorrichtung zum Schneiden und Köpfen (1) von Zuckerrohr, umfassend Mittel (2) zur lösbaren Befestigung mit dem Kopf eines Gelenkarmes (3) in der Form eines einstückigen Rahmens (4), der Aufnahmemittel (5) einer Form, die zu auf dem besagten Arm (3) vorgesehenen Mitteln, nämlich Klötzen, ergänzend ist, umfasst, wobei der besagte Rahmen (4) fest mit Mitteln (7) zum Schneiden des besagten Zuckerrohrs verbunden ist, **dadurch gekennzeichnet, dass** die besagten Schneidmittel (7) einerseits Mittel (8) zum Umschließen des Zuckerrohrs, die als mindestens zwei Klauen (12) ausgestaltet sind, die gelenkig entlang einer Achse (18) senkrecht zum besagten Rahmen (4) sind, so dass sie sich von einer offenen Position in eine geschlossene Position verschieben und so gestaltet sind, dass sie sich zumindest teilweise überlappen, so dass sie einen Raum zum Umschließen des besagten Zuckerrohrs bilden, und andererseits ein Schneidmesser (9) in der Form einer stehenden Scheibe zum Schneiden des im Umschließungsraum gehaltenen Rohrzuckers umfassen, wobei das besagte Schneidmesser sich unterhalb des besagten Rahmens (4) befindet.

2. Vorrichtung nach Anspruch 1, **dadurch gekennzeichnet, dass** das besagte Schneidmesser (9) gelenkig montiert ist, so dass es sich in einer Position zum Abdecken des besagten Umschließungsraums befindet.

3. Vorrichtung nach Anspruch 2, **dadurch gekennzeichnet, dass** das besagte Schneidmesser (9) gleitend gelagert ist, so dass es sich von einer zurückgezogenen Position in die Abdeckposition bewegt, und umgekehrt.

4. Vorrichtung nach irgendeinem der vorgehenden Ansprüche, **dadurch gekennzeichnet, dass** die besagten Schneidmittel wenigstens ein Köpfmesser (10) umfassen, das über einen Auslegerarm (11) gelenkig ist, der drehbar montiert ist und dem besagten Köpfmesser (10) eine kreisförmige Bewegung entlang eines Kreisbogens verleiht, der den besagten Umschließungsraum abdeckt.

5. Vorrichtung nach einem der vorgehenden Ansprüche, **dadurch gekennzeichnet, dass** die besagten Umschließungsmittel (8), das besagte Schneidmesser (9), der besagte Auslegerarm (11) und das besagte Köpfmesser (10) über wenigstens vier hydraulische Stromkreise unabhängig betätigt werden.

6. Vorrichtung nach einem der vorgehenden Ansprüche, **dadurch gekennzeichnet, dass** die besagten Schneidmittel (7) im unteren Teil Schutzmittel in der Form eines Schildes (20) umfassen.

7. Vorrichtung nach irgendeinem der vorgehenden Ansprüche, **dadurch gekennzeichnet, dass** die besagten Umschließungsmittel relativ zu dem besagten Schneidmesser (9), nämlich um einen Winkel von 45°, geneigt sind.

8. Vorrichtung nach irgendeinem der vorgehenden Ansprüche, **dadurch gekennzeichnet, dass** die besagten Umschließungsmittel relativ zu dem Rahmen (4) nach einer seitlichen Auslenkung gelenkig sind.

9. Vorrichtung nach irgendeinem der vorgehenden Ansprüche, **dadurch gekennzeichnet, dass** die besagten Schneidmittel zusätzliche Umschließungsmittel umfassen, die so gelenkig sind, dass sie sich von einer geöffneten Position in eine Position zum Halten des geschnittenen Zuckerrohrs im Umschließungsraum bewegen, und umgekehrt.

## Claims

1. A removable device (1) for cutting and topping sugar canes, comprising means (2) for removable fastening with the head of an articulated arm (3) in the form of a single-piece frame (4) comprising receiving means (5) having a shape complementary to means present on said arm (3), namely pads (6), said frame (4) being integral with means (7) for cutting said canes, wherein said cutting means (7) comprise, on the one hand, means (8) for clamping the canes being in the form of at least two claws (12) hinged along a vertical axis (18) with respect to said frame (4) so as to pass from an open position to a closed position and shaped so to overlap each other at least partially so as to form a space for clamping said canes and, on the other hand, at least one blade (9), in the form of a standing disk, for cutting said canes held in the clamping space, said blade being located under said frame (4).

2. A device according to claim 1, wherein said cutting blade (9) is mounted in a hinging way so as to be in a position covering said clamping space.

3. A device according to claim 2, wherein said cutting blade (9) is slidably mounted so as to pass from a retracted position into said covering position, and vice-versa.

4. A device according to any one of the preceding claims, wherein said cutting means (7) comprise at least one topping blade (10) hinging through an offset arm (11) mounted rotationally so as to impart to said topping blade (10) a circular movement along an arc of a circle covering said clamping space.

5. A device according to claim 4, wherein said clamping means (8), said cutting blade (9) and said topping blade (10) are actuated independently through at least four hydraulic circuits.

6. A device according to one of the preceding claims, wherein said cutting means comprise, in the lower portion, protection means in the form of a shield (20).

7. A device according to any one of the preceding claims, wherein the clamping means are inclined with respect to said cutting blade (9), namely according to an angle of 45°.

8. A device according to any one of the preceding claims, wherein clamping means (8) are hinging relative to said frame (4) according to a lateral movement.

9. A device according to any one of the preceding claims, wherein said cutting means (7) comprise additional clamping means hinging so as to pass from an opening position to a position for holding the cut canes within said clamping space, and vice-versa.
